# EUROPÄISCHE PATENTSCHRIFT

(11) **EP 0 957 026 B1**
(45) Veröffentlichungstag und Bekanntmachung des Hinweises auf die Patenterteilung: **16.06.2004**
(21) Anmeldenummer: 99108030.0
(22) Anmeldetag: 23.04.1999
(51) Int. Cl.: B64D 41/00

(54) **Energieversorgungseinheit an Bord eines Luftfahrzeugs**
Power supply unit on board an aircraft
Unité d'alimentation en énergie à bord d'un aéronef

(30) Priorität: 15.05.1998 DE 19821952
(43) Veröffentlichungstag der Anmeldung: 17.11.1999
(73) Patentinhaber: Ballard Power Systems AG, 73230 Kirchheim / Teck-Nabern (DE)
(72) Erfinder: Graage, Klaus, 73230 Kirchheim (DE)
(74) Vertreter: Beyer, Andreas, Dr.

(56) Entgegenhaltungen:
- DE-A- 3 832 471
- DE-A- 4 001 684
- DE-A- 19 600 936
- DE-U- 29 719 045
- US-A- 5 005 787
- US-A- 5 069 985

## Beschreibung

Die Erfindung betrifft ein Luftfahrzeug, insbesondere ein Passagierflugzeug, mit einer Energieversorgungseinheit.

An Bord eines Passagierflugzeugs bestehen üblicherweise folgende Möglichkeiten zur Energieversorgung:

### Haupttriebwerksgenerator

Die Haupttriebwerke eines Flugzeuges dienen in erster Linie zur Schuberzeugung für den Vortrieb des Flugzeugs. Des weiteren liefern sie Druckluft für die Klimaanlage und über ein Getriebe Leistung für einen Stromgenerator. Dieser liefert Strom für das Bordnetz des Flugzeugs. Die Triebwerke werden vom Kraftstoffsystem des Flugzeugs mit Treibstoff versorgt.

### Auxiliary Power Unit (APU)

In Flugzeugen befindet sich zum Zwecke der Bordstromversorgung, Luftversorgung der Klimaanlage und zum Triebwerksstart eine Gasturbine im Heck des Flugzeuges: die Auxiliary Power Unit APU. Sie wird sowohl am Boden als auch während des Fluges (z.B. bei Start/Landung oder Notsituationen) eingesetzt. Die APU wird vom Kraftstoffsystem des Flugzeugs mit Teibstoff versorgt. Neben der Erzeugung von Druckluft für Klimaanlage und Triebwerkstart per integriertem Kompressor, treibt die APU einen Generator zur Stromerzeugung an.

### Ram Air Turbine (RAT)

Im Rumpf eines Flugzeuges befindet sich eine in die Rumpfumströmung ausfahrbare Luftturbine, die im Notfall (Ausfall des Bordhydrauliksystems) mittels einer angekoppelten Hydraulikpumpe ein Hydrauliksystem des Flugzeuges versorgt, das für Notlandungen ausreichend dimensioniert ist. Diese RAT wird durchschnittlich 1-3 mal pro Flugzeugleben (25 Jahre) benötigt/ausgefahren. Ihre Zuverlässigkeit ist wegen der Abhängigkeit von der aerodynamischen Rumpfumströmung z. Zt. etwas problematisch.

### NiCd-Batterie

In Flugzeugen befindet sich zum Zwecke der Bordstromversorgung ein NiCd Batteriepacket. Dieses dient bei der Flugzeuginbetriebnahme der ersten autarken Stromversorgung an Bord.

### Druckluft zum Antrieb einer Kompressor/Expander-Einheit für die Luftkonditionierung innerhalb der Bord-Klimaanlage

In Flugzeugen befindet sich zum Zwecke der Klimatisierung eine Klimaanlage, die während der gesamten Flug- und Bodenstandzeiten angeschaltet ist. Diese wird mit heißer Druckluft aus den Triebwerken oder aus dem Hilfstriebwerk (APU) versorgt. Die Konditionierung erfolgt über Kühlung mit externer Luft, einer Kompressor/Expander-Einheit und einer Wasserextraktions-Einheit. Energiequelle für den Betrieb der Kompressor/Expander-Einheit ist die vom Triebwerk oder Hilfstriebwerk kommende Druckluft.

Aus der **DE 40 01 684 A1** ist ein Hybridsystem zum Antrieb eines Fahrzeugs beschrieben, das neben einem Akkumulator eine Brennstoffzelle als Energieversorgungseinheit umfaßt.

Die **DE 38 32 471 A1** offenbart ein Brennstoffzellensystem mit frei beweglichem Elektrolyten, das für den Einsatz im schwerelosenraum Raum, beispielsweise in der Raumfahrt, ausgelegt ist.

Der Einsatz von Brennstoffzellen in der Luftfahrt ist aus der **DE 196 00 936 A1** sowie der **DE 40 09 772 A1** bereits bekannt. In beiden Fällen dient die mit der Brennstoffzelle erzeugte elektrische Energie zum Antrieb des Luftfahrzeugs. Angaben zum konkreten Aufbau des Brennstoffzellensystems und dessen Integration in das Luftfahrzeug sind darin jedoch nicht offenbart.

Aufgabe der Erfindung ist es, ein Luftfahrzeug mit einer Energieversorgungseinheit zu schaffen, die gegenüber den in der Beschreibungseinleitung erwähnten konventionellen Systemen einen verbesserten Wirkungsgrad bei reduzierten Schadstoff- und Lärmemissionen aufweist.

Diese Aufgabe wird mit dem Gegenstand des Anspruchs 1 gelöst. Vorteilhafte Ausbildungen der Erfindungen sind Gegenstand weiterer Ansprüche.

Das erfindungsgemäße Luftfahrzeug mit Energieversorgungseinheit umfaßt als Energiewandler eine Brennstoffzelle zur Erzeugung von Gleichstrom.

Als Brennstoffzelle wird insbesondere eine PEM-Brennstoffzelle (PEM Proton Exchange Membrane) eingesetzt.

Als Kraftstoff für die Brennstoffzelle kann ein Kohlenwasserstoff eingesetzt werden, der in einem Reformer zu Wasserstoff umgesetzt wird. Möglich ist aber auch, Wasserstoff in einem Behälter im Flugzeug mitzuführen und der Brennstoffzelle direkt zuzuführen. Diese zweite Möglichkeit bietet sich insbesondere in einem z. Zt. von der Firma Airbus projektierten Wasserstoffflugzeug an, bei dem Wasserstoff ohnehin im Flugzeug gespeichert ist.

Vorteile der Erfindung, insbesonder gegenüber den Gasgeneratoren als Energiewandler:
- keine oder nur geringe Schadstoffemissionen,
- geringere Lärmentwicklung,
- höherer Wirkungsgrad,
- geringere Systemkosten,
- geringerer Verschleiß und damit geringere Wartungsaufwand,

Weitere Vorteile ergeben sich aus der nachfolgenden Beschreibung von einzelnen Ausführungsbeispielen.

Die Erfindung eignet sich für alle Arten von Luftfahrzeugen, insbesondere jedoch Passagierflugzeuge und Großraumpassagierflugzeuge.

Vorteilhafte Ausbildungen der erfindungsgemäßen Energieversorgungseinheit an Bord von Flugzeugen sind insbesondere:

### Haupttriebwerksgenerator

Der bisher eingesetzte Gasgenerator (Energiewandlung: Strom aus Treibstoff) wird durch eine PEM-Brennstoffzelle substituiert.
Als Kraftstoffe sind sowohl ein Kohlenwasserstoff (Umsetzung per Reformer zu Wasserstoff in einem Gaserzeugungssystem) als auch Wasserstoff möglich. Die benötigte Luft wird aus dem Triebwerk oder der Kabinenabluft entnommen.

Der in der Brennstoffzelle produzierte Gleichstrom wird mittels Umrichter in Wechselstrom mit der im Flugzeug üblicherweise verwendeten Spannungslage (110V) gewandelt und der Bordstromanlage zur Verfügung gestellt.

Durch den Ersatz der Gasgeneratoren durch Brennstoffzellen wird der Bordstrom mit einem wesentlich höheren Wirkungsgrad erzeugt, da
1. der Kraftstoff direkt in Strom umgesetzt wird und
2. der Wirkungsgrad von Gasturbinen relativ schlecht ist.

Dies führt zu geringerem Treibstoffverbrauch und damit zu möglichen Gewichtseinsparungen beim mitzuführenden Treibstoff sowie zu geringeren Emissionen.

### Auxiliary Power Unit (APU)

Der bisher eingesetzte Gasgenerator (Energiewandlung: Druckluft und Strom aus Treibstoff) wird durch eine PEM-Brennstoffzelle substituiert. Als Kraftstoffe sind sowohl ein Kohlenwasserstoff (Umsetzung per Reformer zu Wasserstoff in einem Gaserzeugungssystem) als auch Wasserstoff möglich.

Ein Teil des in der Fuel Cell Engine produzierten Gleichstromes wird mittels Umrichter in Wechselstrom mit der im Flugzeug üblicherweise verwendeten Spannungslage (110 V) gewandelt und der Bordstromanlage zur Verfügung gestellt.

Ein zweiter Teil wird entweder als DC oder per Umrichter als AC einem Elektromotor zur Verfügung gestellt, der wiederum einen Kompressor antreibt. Die benötigte Luft wird der Kabinenabluft (ca. 0,7 bar) entnommen. Der Kompressor liefert benötigte Druckluft für Klimaanlage und Triebwerk.

Durch den Ersatz der Gasgeneratoren durch Brennstoffzellen wird der Bordstrom mit einem wesentlich höheren Wirkungsgrad erzeugt, da
1. der Kraftstoff direkt in Strom umgesetzt wird und
2. der Wirkungsgrad von Gasturbinen relativ schlecht ist.

Dies führt zu geringerem Treibstoffverbrauch und damit zu möglichen Gewichtseinsparungen beim mitzuführenden Treibstoff sowie zu geringeren Emissionen.

### Ram Air Turbine (RAT)

Dieser Energiewandler (Energiewandlung: aerodynamische Leistung aus Außenumströmung) wird durch einen PEM-Brennstoffzellenantrieb substituiert. Als Kraftstoffe sind sowohl ein Kohlenwasserstoff (Umsetzung per Reformer zu Wasserstoff im Gaserzeugungssystem) als auch Wasserstoff möglich. Die benötigte Luft wird aus der Kabinenabluft entnommen.

Der in der Brennstoffzelle produzierte Gleichstrom wird mittels Umrichter in Wechselstrom mit der im Flugzeug üblicherweise verwendeten Spannungslage (110 V) gewandelt und betreibt dann eine Hydraulikpumpe und/oder versorgt die Bordstromanlage.

Durch den Ersatz der RAT durch Brennstoffzellen wird Hydraulikenergie bzw. Bordstrom betriebssicherer erzeugt. Daneben könnte dieses System auch evtl. auftretende Bedarfsspitzenpeaks bei der Bordstromversorgung mit abdecken helfen und somit ein weiteres, unabhängiges System zur Bordstromerzeugung darstellen.

### NiCd-Batterie

Dieser Energiewandler (Strom aus chemisch gespeicherter Energie) wird durch eine PEM-Brennstoffzelle substituiert.
Als Kraftstoffe sind sowohl ein Kohlenwasserstoff (Umsetzung per Reformer zu Wasserstoff im Gaserzeugungssystem) als auch Wasserstoff möglich.

Der in der Brennstoffzelle produzierte Gleichstrom wird mittels Umrichter in Wechselstrom mit der im Flugzeug üblicherweise verwendeten Spannungslage (110 V) gewandelt und der Bordstromanlage zur Verfügung gestellt.

Durch den Ersatz der Batterien durch Brennstoffzellen wird der Bordstrom mit einem hohen Wirkungsgrad erzeugt und es gibt keinen Nachladebedarf für die Batterien mehr, so daß die Verfügbarkeit dieses Energieerzeugers erhöht wird.

### Antrieb einer Kompressor/Expander-Einheit für die Luftkonditionierung innerhalb der Bord-Klimaanlage

Die benötigte Antriebsenergie für die Klimaanlage (Druckluft, die per Gasturbine erzeugt wurde und einen Komprex antreibt) wird erfindungsgmäß mittels einer PEM-Brennstoffzelle erzeugt. Als Kraftstoffe sind sowohl ein Kohlenwasserstoff (Umsetzung per Reformer zu Wasserstoff in einem Gaserzeugungssystem) als auch Wasserstoff möglich.

Die gewonnene elektrischen Energie wird entweder als DC oder per Umrichter als AC einem Elektromotor zur Verfügung gestellt, der widerum den in der Klimaanlage genutzten Kompressor antreibt. Die zum Betrieb der Brennstoffzelle benötigte Luft wird der Kabinenabluft (ca. 0,7 bar) entnommen. Die benötigte Frischluft kann mittels Kompressor der Außenluft entnommen werden, z.B. über eine separate Leitung und einen Einlaß in der Bordaußenhaut). Der Kompressor liefert dann die Druckluft für die Klimaanlage.

Ein Teil des in der Brennstoffzelle produzierten Gleichstromes kann evtl. in Notfällen mittels Umrichter in Wechselstrom mit der im Flugzeug üblicherweise verwendeten Spannungslage (110 V) gewandelt und der Bordstromanlage zur Verfügung gestellt werden. Durch die Lieferung der Energie für die Klimaanlage mittels Brennstoffzellen wird die Energie vor Ort mit einem wesentlich höheren Wirkungsgrad erzeugt als per APU oder Haupttriebwerk, da
1. der Wirkungsgrad von Gasturbinen relativ schlecht und der FCE Wirkungsgrad sehr gut ist.
2. die Energieumwandlungskette nun wesentlich einfacher ist.

Dies führt zu einem geringeren Treibstoffverbrauch und damit zu möglichen Gewichtseinsparungen beim mitzuführenden Treibstoff sowie zu geringeren Emissionen.

### Selbständiger Notsender (Emergency Locator Transmitter ELT)

In Flugzeugen befindet sich zum Zwecke des Auffindens eines Flugkörpers nach einem Notfall ein batteriegetriebener ELT. Um die Einsatzdauer dieses Systems zu verlängern (Funkzeit), kann ein Brennstoffzellensystem inklusive Tanksystem und Luftversorgung eingesetzt werden.

Mehrere Ausführungsbeispiele der Erfindung werden anhand von Zeichnungen näher erläutert. Es zeigen:
- Fig. 1,2: einen Teil eines erfindungsgemäßen Luftfahrzeuges mit Energieversorgungseinheit, ausgebildet als Auxiliary Power Unit (APU) in verschiedenen Darstellungen;
- Fig. 3: eine weitere erfindungsgemäße Energieversorgungseinheit in einem Luftfahrzeug, ausgebildet als Haupttriebwerksgenerator.

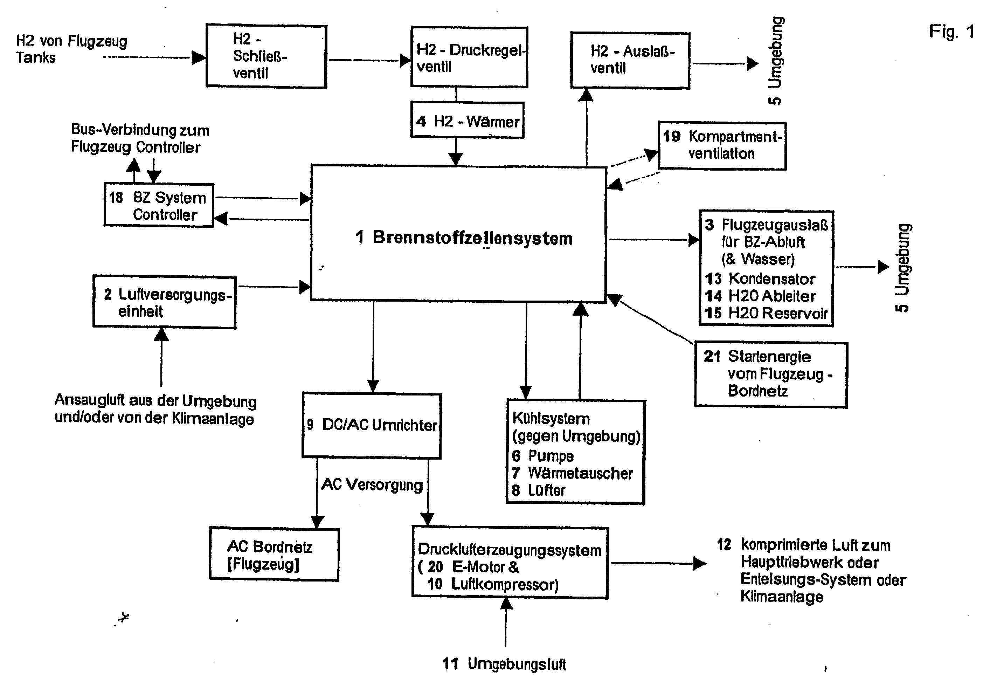

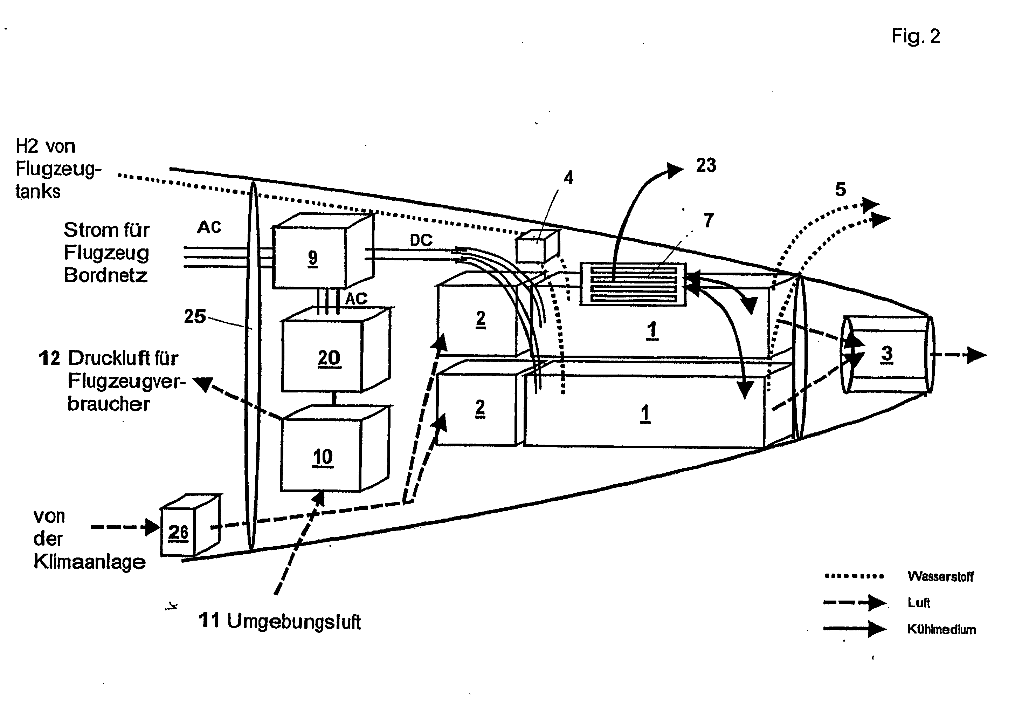

Die Fig. 1 und 2 zeigen jeweils eine Auxiliary Power Unit als Beispiel für eine erfindungsgemäße Energieversorgungseinheit in einem Luftfahrzeug. Dabei ist in Fig. 1 das Zusammenwirken der beteiligten Komponenten in mehr schematischer Darstellung dargestellt, während Fig. 2 eine konkrete Ausführung einer in die Heckspitze eines Passagierflugzeugs integrierten Auxiliary Power Unit zeigt. Die Form der in Fig. 2 gezeigten Heckspitze entspricht im wesentlichen der Heckspitze eines Airbus A320.

Die Brennstoffzelle besteht im wesentlichen aus einer PEM-Brennstoffzelle, die mit hohem Wirkungsgrad Gleichstrom produziert. Dazu werden auf beiden Seiten einer Membran die Reaktionsgase Wasserstoff und Luft zugeführt. Die entstehende Reaktionswärme wird bei einem Temperatumiveau von etwa 80°C mittels eines flüssigen Kühlmediums abgeführt. Für die fluide Ver- und Entsorgung der Brennstoffzelle sind drei verfahrenstechnische Strecken (Luft, Wasserstoff, Kühlmedium) innerhalb des Brennstoffzellensystems realisiert.

Folgende fluide, mechanische oder elektrische Verknüpfungspunkte werden zwischen Flugzeug und Brennstoffzelle realisiert:

### 1. Luft

In der in Fig. 2 gezeigten Ausführung sind zwei Brennstoffzellenmodule 1 vorhanden, die jeweils einen Brennstoffzellenstack und Systemperipherie umfassen. Jedem Brennstoffzellenmodul vorgeschaltet ist eine Luftversorgungseinheit 2. Diese umfaßt insbesondere eine Kompressor/Expandereinheit zur Kompression der der Brennstoffzelle zuzuführenden Luft sowie zur Energierückgewinnung aus der aus der Brennstoffzelle austretenden, erwärmten Luft, einen Luftfilter und einen Schalldämpfer. Die Luftversorgungseinheit 2 wird über einen Filter 26 aus der Abluft der Bordklimaanlage oder über eine Einströmungsöffnung in der Flugzeugaußenhaut versorgt. Die Luftentsorgung erfolgt über einen am Flugzeugheck vorhandenen Luftauslaßeinheit 3.
Zur Versorgung der flugzeugeigenen Wasseranlage (z.B. für Küche, Toiletten, usw.) könnten Wasser aus dem feuchten, warmen Abluftstrom der Brennstoffzellen 1 gewonnen werden. Dazu wird ein mit der Flugzeug-Umgebungsluft gekühlter Wasser-Kondensator 13 (Fig. 1) in den Abluftstrom geschaltet. Dieser fällt durch eine Temperaturabsenkung der feuchten Luft Wasser aus, das mittels Kondensatableiter 14 einem Wasserreservoir 15 zugeführt wird.

### 2. Wasserstoff

Die Wasserstoffversorgung der Brennstoffzelle 1 erfolgt gasförmig aus mitgeführten Behältern und wird unter Einsatz von Brennstoffzellenabwärme im Wasserstoffwärmer 4 auf Brennstoffzellentemperatur erwärmt. Bei zukünftigen Flugzeugantrieben, die Wasserstoff als Brennstoff verwenden, kann der für die Brennstoffzelle benötigte Wasserstoff direkt aus den Wasserstofftanks des Flugzeugs entnommen werden.
Die Abfuhr des aus der Brennstoffzelle austretenden Wasserstoffs erfolgt mittels eines Auslaßrohrs 5 von der Brennstoffzelle 1 zur Flugzeugaußenhaut.

### 3. Kühlmedium

Die Abwärme 23 der Brennstoffzelle 1 wird über ein in dem Brennstoffzellenmodul 1 befindlichen Wärmetauscher über eine flugzeugseitige Pumpe 6 (Fig. 1) zu einem flugzeugseitigen weiteren Wärmetauscher 7 mit integriertem Lüfter 8 an die Fugzeugumgebung abgegeben.

### 4. Wechselstrom-Erzeugung

Die von der Brennstoffzelle 1 gelieferte Gleichspannung wird mittels Umrichter 9 auf die im Bordnetz des Flugzeug benötigten Wechselspannungen (ca. 110 V AC) konvertiert. Über den Umrichter 9 kann außerdem der Elektromotor 20 versorgt werden. Dieser treibt in der gezeigten Ausführung den Druckluftkompressor 10 an, Dessen Funktion wird unter Ziff. 6 näher erläutert.

Mit den heute verfügbaren Brennstoffzellen liefert jede der beiden Brennstoffzellenmodule 1 etwa 60 kW bei 200 V. Somit können ca. 120 kW Gleichstrom-Leistung an den Gleichstrom-Zwischenkreis abgegeben werden. Zum Vertgeich: Der im Airbus A320 derzeit eingesetzte konventionelle APU-Generator liefert ca. 100 kW.

### 5. Starten der Brennstoffzelle

Zum Starten 21 der Brennstoffzelle wird über das Flugzeugbordnetz der brennstoffzelleninteme Startmotor versorgt, der die Brennstoffzelle innerhalb von ca. 1 Sekunde startet.

### 6. Druckluftkompression

Der oben bereits erwähnte Druckluftkompressor 10 liefert Druckluft, z.B. für die Flugzeug-Klimaanlage. Hierbei wird mit der Druckluft der Kompressor einer Kompressor/Expander-Einheit für die Luftkonditionierung innerhalb der Flugzeug-Klimaanlage angetrieben. Weitere Aufgaben für die vom Kompressor 10 erzeugte Druckluft sind insbesondere Triebwerksstart und Enteisung. Der Elektroantrieb 20, mit dem der Kompressor 10 über eine Welle direkt verbunden ist, benötigt ca. 120 - 150 kW elektrische Leistung aus der Brennstoffzelle 1. Der Elektroantrieb 9 kann mit einem flüssigen Medium gekühlt werden. Die Luftzufuhr des Kompressors 10 erfolgt aus der Flugzeugumgebungsluft 11, und zwar über eine Einströmungsöffnung in der Flugzeugaußenhaut. Die komprimierte und erwärmte Luft wird an die im Flugzeug vorhandene Druckluftleitung 12 abgegeben, die sie zu dem entsprechenden Verbraucher führt. Beim konventionellen APU-Generator des Airbus A320 wird am Boden derzeit ein Luftstrom von ca. 1 kg/s bei 2,5 bar und bei 15 °C Umgebungstemperatur vom Druckluftkompressor gefördert.

### 7. Brennstoffzellensteuerung

Die Regelung und Steuerung der Brennstoffzelle 1 erfolgt über ein eigenes Brennstoffzellen-Steuergerät 18 (Fig. 1), das mittels Flugzeug-Bus-System mit dem Rechner des Flugzeugs verbunden ist und über das Bordnetz des Flugzeugs versorgt wird.

### 8. Compartment-Ventilation

Um bei einem Fehlerfall die Ansammlung von Wasserstoff in der Heckspitze sowie in den Brennstoffzellenmodulen 1 zu vermeiden, wird eine Compartment-Ventilation 19 eingebaut, die einen definierten Luftstrom durch den gesamten Raumbereich der Heckspitze (der durch die Wandung 25 begrenzt wird) und durch die Brennstoffzellenmodule 1 zieht.

Der erfindungsgemäße Einsatz einer Brennstoffzelle in einer APU für ein Luftfahrzeug hat folgende Vorteile:
- keine Schadstoffemissionen, was insbesondere bei Vorfeld- oder Turnaroundpositionen des Flugzeugs von Bedeutung ist.
- deutlich weniger Lärmentwicklung im Vergleich mit einer Gasturbine.
- höherer Wirkungsgrad (> 40 % für das Brennstoffzellensystem, ca. 18% für die gesamte APU), daraus folgt ein geringerer Kraftstoffbedarf und damit eine mögliche Gewichtserspamis.
- eine Erzeugung von Wasser an Bord für Küche, WC und Klimaanlage (Befeuchtung der Luft) ist möglich.
- wesentlich geringere Systemkosten als konventionelle APU (ca. 1000$/kW) sind möglich.
- geringerer Verschleiß und Wartungsaufwand durch niedrige Arbeitstemperatur (80°C) und weniger mechanisch bewegte Teile (konventionelle APU: > 1000 °C an heißester Stelle).

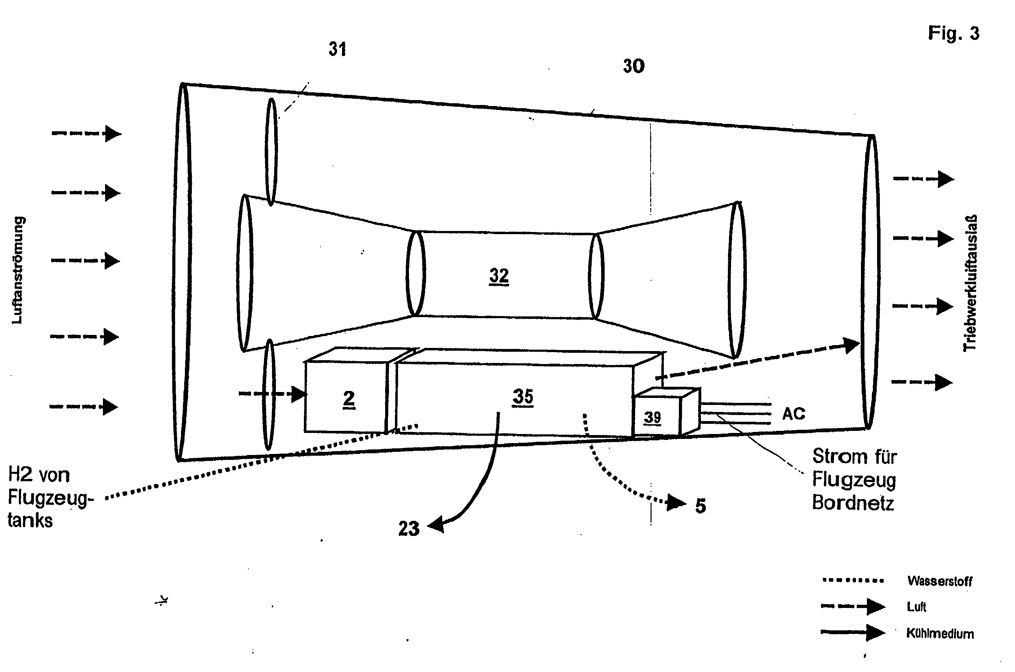

Fig. 3 zeigt eine weitere Ausführung der Erfindung, bei der der Haupttriebwerksgenerator eines Flugzeugs durch eine Brennstoffzelle ersetzt ist. Dargestellt ist das Flugzeughaupttriebwerk 30 mit Gebläse 31 und Brennkammer 32. Innerhalb des Treibwerks befindet sich die Brennstoffzelle zur Erzeugung von elektrischem Gleichstrom. Der Brennstoffzelle 35 vorgeschaltet ist die Luftversorgungseinheit 2. Die von der Brennstoffzelle gelieferte Gleichspannung wird mittels Umrichter 39 auf die im Bordnetz des Flugzeug benötigten Wechselspannungen (ca. 110 V AC) konvertiert.

Das erfindungsgemäße Brennstoffzellensystem produziert dann 110 V Wechselstrom mit einer Frequenz von 400 Hz für das Flugzeug-Bordnetz unabhängig von der Funktion des Haupttriebwerks des Flugzeugs. Somit steht eine weitere unabhängige Stromquelle an Bord des Flugzeugs zur Verfügung.

Die Luftversorgung der Brennstoffzelle erfolgt wahlweise mit Luft aus der Ansaugöffnung des Triebwerks oder aus der Druckstufe des Triebwerks. Die Abluft aus der Brennstoffzelle 35 wird über den Auslaß des Triebwerks abgeführt.

Die Abwärme 23 der Brennstoffzelle 35 wird ebenso wie der aus der Brennstoffzelle austretende Wasserstoff an die Fugzeugumgebung 5 abgegeben.

Die Wasserstoffversorgung erfolgt aus im Luftfahrzeug mitgeführten Behältem/Tanks. Hinsichtlich Kühlung, Starten und Steuerung der Brennstoffzelle können die oben im Zusammenhang mit Fig. 1 und Fig. 2 beschriebenen Maßnahmen Anwendung finden. Wie bei den in Fig. 1 und Fig. 2 beschriebenen Systemen kann aus dem Abluftstrom der Brennstoffzelle Wasser für die Wasservorsorgung des Luftfahrzeugs gewonnen werden. Zur Vermeidung der Ansammlung von Wasserstoff kann eine Compartment-Ventilation vorhanden sein.

## Patentansprüche

1. Luftfahrzeug mit einer Energieversorgungseinheit an Bord zur Substitution eines Haupttriebwerksgenerators, einer Auxiliary Power Unit, einer Ram Air Turbine oder eine NiCd-Batterie, **gekennzeichnet durch**
- eine Brennstoffzelle (1) zur Erzeugung von Gleichstrom; wobei zur Luftversorgung der Brennstoffzelle (1) Abluft der Luftfahrzeug-Klimaanlage oder Luftfahrzeugaußenluft eingesetzt wird; und
- aus der Brennstoffzellenabluft Wasser für die Wasservorsorgung des Luftfahrzeugs gewonnen wird, wobei die Brennstoffzellenabluft anschließend an die Luftfahrzeugumgebung (5) abgeführt wird; und
- der aus der Brennstoffzelle (1) austretende Wasserstoff an die Luftfahrzeugumgebung (5) abgeführt wird.

2. Luftfahrzeug nach Anspruch 1, **gekennzeichnet durch** einen Umrichter (9), mit dem der von der Brennstoffzelle (1) gelieferte Gleichstrom in Wechselstrom gewandelt wird.

3. Luftfahrzeug nach einem der Ansprüche 1 oder 2, **dadurch gekennzeichnet, daß** der mittels der Brennstoffzelle (1) gewonnene Strom für das Bordnetz des Luftfahrzeugs oder für das Funkmodul eines selbständigen Notsenders eingesetzt wird.

4. Luftfahrzeug nach einem der Ansprüche 1 bis 3, **gekennzeichnet durch** einen mit der Wechselstromseite des Umrichters (9) verbundenen Elektroantrieb (20).

5. Luftfahrzeug nach Anspruch 4, **dadurch gekennzeichnet, daß** der Elektroantrieb (20) einen Druckluftkompressor (10) oder eine Hydraulikpumpe antreibt.

6. Luftfahrzeug nach Anspruch 5, **dadurch gekennzeichnet, daß** der Druckluftkompressor (10) Druckluft für die Klimaanlage des Luftfahrzeugs oder für den Start des Luftfahrzeugtriebwerks oder für die Luftfahrzeugenteisung liefert.

7. Luftfahrzeug nach einem der vorangehenden Ansprüche, **dadurch gekennzeichnet, daß** die Brennstoffzelle (35) mit Umgebungsluft aus der Ansaugöffnung des Luftfahrzeugtriebwerks (30) oder aus der Druckstufe des Luftfahrzeugtriebwerks (30) versorgt wird.

8. Luftfahrzeug nach einem der vorangehenden Anspüche, **dadurch gekennzeichnet, daß** die Brennstoffzellenabluft über den Auslaß des Luftfahrzeugtriebwerks (30) an die Luftfahrzeugumgebung (5) abgeführt wird.

9. Luftfahrzeug nach einem der vorangehenden Ansprüche, **dadurch gekennzeichnet, daß** die Brennstoffzelle (1) aus im Luftfahrzeug mitgeführten Behältern mit Wasserstoff versorgt wird.

10. Luftfahrzeug nach einem der vorangehenden Ansprüche, **dadurch gekennzeichnet, daß** der der Brennstoffzelle (1) zugeführte Wasserstoff mittels der Abwärme der Brennstoffzelle (1) auf Brennstofzellentemperatur erwärmt wird.

11. Luftfahrzeug nach einem der vorangehenden Ansprüche, **dadurch gekennzeichnet, daß** der der Brennstoffzelle (1) zugeführte Wasserstoff über eine Wasserstoff-Erzeugungseinheit an Bord des Luftfahrzeugs erzeugt wird.

12. Luftfahrzeug nach Anspruch 11, **dadurch gekennzeichnet, daß** die Wasserstoff-Erzeugungseinheit ein Reformer zur Erzeugung von Wasserstoff aus Kohlenwasserstoffen ist.

13. Luftfahrzeug nach einem der vorangehenden Ansprüche, **dadurch gekennzeichnet, daß** zum Starten der Brennstoffzelle (1) ein Brennstoffzellenstartmotor vorhanden ist, der über das Bordnetz des Luftfahrzeugs versorgt wird.

14. Luftfahrzeug nach einem der vorangehenden Ansprüche, **dadurch gekennzeichnet, daß** die Brennstoffzelle (1) eine PEM-Brennstoffzelle ist.

## Claims

1. Aircraft comprising an on-board power supply unit for substituting a main engine generator, an auxiliary power unit, a ram air turbine or a NiCd battery,
**characterized by**
- a fuel cell (1) for generating direct current, wherein outlet air of the aircraft air conditioning system or aircraft external air is employed for supplying the fuel cell (1) with air, and wherein
- for supplying the aircraft with water, water is extracted from the fuel cell outlet air, wherein the fuel cell outlet air is subsequently released to the surroundings of the aircraft (5), and
- the hydrogen exiting the fuel cell (1) is released to the surroundings of the aircraft (5).

2. Aircraft according to claim 1,
**characterized by** a converter (9), by means of which the direct current supplied by the fuel cell (1) is converted into alternating current.

3. Aircraft according to any one of claims 1 or 2,
**characterized in that** the electricity gained by means of the fuel cell (1) is used for the on-board electrical system of the aircraft or for the radio module of an autonomous emergency transmitter.

4. Aircraft according to any one of claims 1 to 3,
**characterized by** an electric drive (20) connected to the alternating current side of the converter (9).

5. Aircraft according to claim 4,
**characterized in that** the electric drive (20) drives an air compressor (10) or a hydraulic pump.

6. Aircraft according to claim 5,
**characterized in that** the air compressor (10) provides compressed air for the air conditioning system of the aircraft or for starting of the aircraft engine or for de-icing the aircraft.

7. Aircraft according to any one of the preceding claims,
**characterized in that** the fuel cell (35) is supplied with ambient air from the intake port of the aircraft engine (30) or from the pressure stage of the aircraft engine (30).

8. Aircraft according to any one of the preceding claims,
**characterized in that** the fuel cell outlet air is released to the surroundings of the aircraft (5) via the outlet of the aircraft engine (30).

9. Aircraft according to any one of the preceding claims,
**characterized in that** the fuel cell (1) is supplied with hydrogen from containers transported in the aircraft.

10. Aircraft according to any one of the preceding claims,
**characterized in that** the hydrogen supplied to the fuel cell (1) is heated to fuel cell temperature by means of the waste heat of the fuel cell (1).

11. Aircraft according to any one of the preceding claims,
**characterized in that** the hydrogen supplied to the fuel cell (1) is generated by an on-board hydrogen-generating unit of the aircraft.

12. Aircraft according to claim 11,
**characterized in that** the hydrogen-generating unit is a reformer for generating hydrogen from hydrocarbon.

13. Aircraft according to any one of the preceding claims,
**characterized in that** a fuel cell starting motor is provided for starting the fuel cell (1), which motor is supplied with energy by the on-board electrical system of the aircraft.

14. Aircraft according to any one of the preceding claims,
**characterized in that** the fuel cell (1) is a PEM fuel cell.

## Revendications

1. Aéronef équipé d'une unité d'alimentation en énergie pour remplacer un générateur de bord entraîné par les réacteurs, une unité de puissance auxiliaire, une RAT (Ram Air Turbine) ou une batterie Ni-Cd,
**caractérisé par**
- une pile à combustible (1) pour la production de courant continu, l'alimentation en air de la pile à combustible (1) étant assurée à partir de l'air vicié du groupe de climatisation de l'aéronef ou de l'air prélevé à l'extérieur à l'aéronef, et
- l'eau destinée à l'alimentation en eau de l'aéronef étant produite à partir de l'air rejeté par la pile à combustible, l'air rejeté par la pile à combustible étant par la suite expulsé dans l'environnement extérieur de l'aéronef (5), et
- l'hydrogène sortant de la pile à combustible (1) étant rejeté dans l'environnement extérieur de l'aéronef (5).

2. Aéronef selon la revendication 1,
**caractérisé par** un convertisseur (9) à l'aide duquel le courant continu fourni par la pile à combustible (1) est converti en courant alternatif.

3. Aéronef selon l'une des revendications 1 ou 2,
**caractérisé en ce que** le courant produit par la pile à combustible (1) est utilisé pour le réseau de bord de l'aéronef ou pour le module radio d'un émetteur de secours autonome.

4. Aéronef selon l'une des revendications 1 à 3,
**caractérisé par** un moteur électrique (20) relié au côté alternatif du convertisseur (9).

5. Aéronef selon la revendication 4,
**caractérisé en ce que** le moteur électrique (20) entraîne un compresseur d'air (10) ou une pompe hydraulique.

6. Aéronef selon la revendication 5,
**caractérisé en ce que** le compresseur d'air (10) fournit l'air comprimé pour le groupe de climatisation de l'aéronef ou pour le démarrage des réacteurs de l'aéronef ou pour le dégivrage de l'aéronef.

7. Aéronef selon l'une des revendications précédentes,
**caractérisé en ce que** la pile à combustible (35) est alimentée en air à partir de l'air extérieur provenant de l'orifice d'aspiration du réacteur (30) de l'aéronef ou provenant de l'étage de pression du réacteur (30) de l'aéronef.

8. Aéronef selon l'une des revendications précédentes,
**caractérisé en ce que** l'air rejeté par la pile à combustible est expulsé dans l'environnement extérieur de l'aéronef (5) via l'échappement du réacteur (30) de l'aéronef.

9. Aéronef selon l'une des revendications précédentes,
**caractérisé en ce que** la pile à combustible (1) est alimentée en hydrogène à partir de réservoirs embarqués sur l'aéronef.

10. Aéronef selon l'une des revendications précédentes,
**caractérisé en ce que** l'hydrogène amené à la pile à combustible (1) est chauffé et porté à la température de la pile à combustible à l'aide de la chaleur rejetée par la pile à combustible (1).

11. Aéronef selon l'une des revendications précédentes,
**caractérisé en ce que** l'hydrogène amené à la pile à combustible (1) est produit à bord de l'aéronef à l'aide d'une unité de production d'hydrogène.

12. Aéronef selon la revendication 11,
**caractérisé en ce que** l'unité de production d'hydrogène consiste en un reformeur pour la production d'hydrogène à partir d'hydrocarbures.

13. Aéronef selon l'une des revendications précédentes,
**caractérisé en ce que** le démarrage de la pile à combustible est assuré par un moteur alimenté par le réseau de bord de l'aéronef.

14. Aéronef selon l'une des revendications précédentes,
**caractérisé en ce que** la pile à combustible (1) est une pile PEM.
